# EUROPEAN PATENT APPLICATION

(11) **EP 2 958 122 A1**
(43) Date of publication of application: **23.12.2015**
(21) Application number: 14749115.3
(22) Date of filing: 07.02.2014
(51) Int. Cl.: H01G 11/32

(54) **GRAPHENE LITHIUM ION CAPACITOR**

(30) Priority: 08.02.2013 US 201361762334 P
(71) Applicant: LG Electronics Inc., Seoul 150-721 (KR)
(72) Inventor: SEO, Hun, Seoul 137-893 (KR); PARK, Kihoon, Seoul 137-893 (KR); KIM, Kwangheon, Seoul 137-893 (KR); KIM, Ilhwan, Seoul 137-893 (KR); YANG, Kwangsuk, Seoul 137-893 (KR); LEE, Jaeseok, Seoul 137-893 (KR)
(74) Representative: Katérle, Axel
(86) International application number: PCT/KR2014/001055
(87) International publication number: WO 2014/123385

(57) **Abstract**

The present invention proposes a graphene lithium ion capacitor formed of a graphene material and including electrodes pre-doped with lithium ions. There is provided a graphene lithium ion capacitor according to an exemplary embodiment of the present invention, including: at least a part of a cathode and an anode formed of a graphene material; a lithium sacrificial electrode electrically connected to the anode so as to provide pre-doping lithium ions to the anode; a separator disposed between the cathode and the anode; and an electrolyte bonded to the cathode and the anode in a state of being dissociated into ions to flow current between the cathode and the anode, in which the anode is formed of a multilayered structure so as to adsorb lithium ions provided from the lithium sacrificial electrode on the surface and accommodate the lithium ions intercalated between graphene layers, and at least a part of the surface and the multilayered structure are formed of lithium carbide by reaction with the lithium ions.

## Description

### TECHNICAL FIELD

The present invention relates to a graphene lithium ion capacitor showing high energy and high output performances by using a graphene material.

### BACKGROUND ART

A capacitor refers to an electronic device that may charge a predetermined electric capacitance by storing electricity in advance. There are many types of capacitors, but particularly, a capacitor in which the performance of electric capacitance is intensively reinforced among the performances of the capacitor is referred to as a supercapacitor. Studies have been continuously conducted on the supercapacitor, and various types of supercapacitors have been reported.

The existing lithium ion capacitor includes a cathode for an electrical double-layer capacitor (EDLC) and an anode for a lithium secondary battery, and has characteristics of high working voltage and large capacitance. Accordingly, it is known that a lithium ion capacitor is excellent in energy density compared to the electrical double-layer capacitor.

However, it is known that the lithium ion capacitor has the following problems.

First, energy density characteristics of the lithium ion capacitor largely depend on the specific capacitance of the cathode under the rated voltage and rated lower limit voltage conditions, and the specific capacitance of an activated carbon material which is applied as a cathode material of the lithium ion capacitor has a limitation (up to approximately 100 F/g), and thus, limits an improvement in energy density characteristics of the lithium ion capacitor.

Next, the output density of the lithium ion capacitor is limited by an electrode having relatively poor output characteristics among the cathode and the anode, and a graphite material which is applied as an anode material shows relatively low output characteristics, and thus, limits an improvement in output density of the entire lithium ion capacitor.

These problems occur due to characteristics of an activated carbon material and a graphite material, which are used in the lithium ion capacitor, and thus, are difficult to overcome as long as the same material as a material for the lithium ion capacitor is used. Accordingly, various attempts to overcome the problems of the lithium ion capacitor have been continuously studied.

### DISCLOSURE OF THE INVENTION

Therefore, an object of the present invention is to propose a capacitor having a structure different from capacitors in the related art.

Another object of the present invention is to suggest a capacitor with an improved energy density as a specific surface area larger than those of the capacitors in the related art has been provided.

To achieve these and other advantages and in accordance with the purpose of the present invention, as embodied and broadly described herein, there is provided a graphene lithium ion capacitor according to an exemplary embodiment of the present invention, including: a cathode and an anode formed of a graphene material partially or wholly; a lithium sacrificial electrode electrically connected to the anode so as to provide pre-doping lithium ions to the anode; a separator disposed between the cathode and the anode; and an electrolyte bonded to the cathode and the anode in a state of being dissociated into ions to flow current between the cathode and the anode, in which the anode is formed of a multilayered structure so as to adsorb lithium ions provided from the lithium sacrificial electrode on a surface thereof and so as to accommodate the lithium ions intercalated between graphene, and at least a part of the surface and the multilayered structure are formed of lithium carbide by reaction with the lithium ions.

According to an exemplary embodiment related to the present invention, the anode may be formed by stacking 2 to 500 layers of the graphene layers so as to form the multilayered structure.

According to another exemplary embodiment related to the present invention, the anode may be formed of a composite material in which the graphene material is mixed with a heterogeneous material, and the heterogeneous material may be at least one selected from a group consisting of a) a metal material which is reacted with the lithium ions to form a lithium metal alloy, b) a metal oxide which is reacted with the lithium ions to form a lithium metal oxide, c) a sulfide which is reacted with the lithium ions to form a lithium sulfide, and d) a nitride which is reacted with the lithium ions to form a lithium nitride.

According to another exemplary embodiment related to the present invention, the lithium sacrificial electrode may be electrically connected to the graphene material of the anode to form a galvanic cell and may be dissociated into the lithium ions by an electrochemical reaction, so as to provide pre-doping lithium ions to the anode.

According to another exemplary embodiment related to the present invention, the lithium sacrificial electrode may be electrically connected to the graphene material of the anode and may be dissociated into the lithium ions by externally applied voltage and current, so as to provide pre-doping lithium ions to the anode.

According to another exemplary embodiment related to the present invention, the lithium sacrificial electrode may be dissociated into lithium ions by a high temperature environment which is locally formed on the lithium sacrificial electrode compared to the other regions of the capacitor, so as to provide pre-doping lithium ions to the anode.

According to another exemplary embodiment related to the present invention, the lithium sacrificial electrode may be dissociated into lithium ions by a solubilizing agent injected into the capacitor so as to provide pre-doping lithium ions to the anode, and the solubilizing agent may be composed of organic molecules which donate electrons to the lithium ions.

The solubilizing agent may be a single-molecule compound selected, in combination, from the group consisting of a) a 5-membered or 6-membered monocyclic compound including a heterogeneous element of C, N, O, Si, P, or S; b) a polycyclic compound in which at least two rings among rings are connected to each other; and c) a polycyclic compound in which at least two rings among rings share at least one element.

According to another exemplary embodiment related to the present invention, the cathode may be formed of a graphene material having a specific surface area of 100 m²/g or more.

According to another exemplary embodiment related to the present invention, at least a part of the cathode may be formed in a wrinkled or crumpled form so as to prevent the specific surface area from being decreased due to the restacking of the graphene layers.

According to another exemplary embodiment related to the present invention, the cathode may include a spacer intercalated between the graphene layers so as to prevent the specific surface area from being decreased due to the restacking of the graphene layers, and the spacer may be formed of a carbon material so as to maintain an electric conductivity of the cathode while preventing the graphene layers from being restacked.

The spacer may be at least one selected from a group consisting of carbon nano tube, carbon nano fiber, and carbon black.

According to another exemplary embodiment related to the present invention, the cathode may be formed via a process of being exposed to oxygen, carbon dioxide, or steam so as to further include pores which increase the specific surface area of the graphene.

According to another exemplary embodiment of the present invention, the cathode may be formed via a chemical reaction with any one of acid, base, and metallic salt so as to further include pores which increase the specific surface area of the graphene, and the acid, base, and metallic salt may include H₃PO4, KOH, NaOH, K₂CO₃, Na₂CO₃, ZnCl₂, AlCl₃, and MgCl₂.

According to another exemplary embodiment related to the present invention, the cathode may be formed by doping the graphene with a heterogeneous material so as to improve reactivity with ions dissociated into the electrolyte, and the heterogeneous material may be at least one selected from a group consisting of nitrogen, sulfur, oxygen, silicone, and boron.

According to another exemplary embodiment of the present invention, the cathode may be formed of a composite material in which the graphene material is mixed with a heterogeneous material so as to improve the specific capacitance due to oxidation and reduction reaction with ions dissociated into the electrolyte, and the heterogeneous material may be at least one selected from the group consisting of a metal oxide, a sulfide, a nitride, MPO₄ (herein, M is a transition metal), and a chalcogen material.

According to another exemplary embodiment related to the present invention, at least one of the cathode and the anode may include: a binder formed so as to attach the graphene layers to each other; and a conductive material formed so as to limit the loss of electric conductivity due to the binder.

The binder may include polyvinylidene fluoride (PVDF), polytetrafluoroethylene (PTFE), polyvinyl alcohol (PVA), and styrene butadiene (SBR).

The conductive material may include carbon black and vapor grown carbon fiber (VGCF).

At least one of the cathode and the anode, which comprises the binder and the conductive material may be formed by mixing the graphene material, the binder, and the conductive material in a slurry form, and coating a current collector with the slurry.

At least one of the cathode and the anode, which comprises the binder and the conductive material may be formed by mixing the graphene material, the binder, and the conductive material to form a paste kneading sheet, and attaching the paste kneading sheet to a current collector.

According to another exemplary embodiment related to the present invention, the electrolyte may be formed by dissolving lithium salt in an organic solvent.

According to another exemplary embodiment related to the present invention, the electrolyte may be formed by dissolving lithium salt in an ionic liquid.

According to an another exemplary embodiment related to the present invention, a weight ratio of the cathode and the anode may be 0.5 to 5.

According to the present invention having the configuration as described above, the anode having a multilayered structure to be formed by stacking graphene layers may improve output characteristics of a capacitor. The graphene anode having a multilayered structure sufficiently includes a reaction site which may be reacted with lithium ions by a wide specific surface area. Further, when lithium ions are intercalated into the graphene material or desorbed from the graphene material, it is possible to improve output characteristics of the anode because the diffusion distance of lithium ions may be shortened more than the distance for the structure in the related art.

In addition, the present invention may provide a capacitor in which the energy density is improved more than for the structure in the related art by applying the graphene material even to the cathode. The theoretical specific surface area of graphene is 2.675 m²/g, and when the theoretical specific surface area is all utilized, an electrical double-layer specific capacitance of 550 F/g or more may be theoretically implemented. Therefore, when the graphene material is utilized in the cathode, a capacitor having high specific capacitance characteristics of 500 F/g or more may be theoretically provided.

Furthermore, graphene in the present invention has an electric conductivity of approximately 2 x 10² S/m, which is almost similar to that of graphite, and thus, has a very high value among the carbon-based materials. Therefore, it is possible to provide a capacitor having sufficiently high specific capacitance even when no conductive material is used or a conductive material is used in a very small amount.

### BRIEF DESCRIPTION OF THE DRAWINGS

FIG. 1 is a conceptual view of a graphene lithium ion capacitor related to an exemplary embodiment of the present invention, illustrating a state before being pre-doped with lithium ions;
FIG. 2 is a conceptual view illustrating a state after the graphene lithium ion capacitor illustrated in FIG. 2 is pre-doped with lithium ions;
FIG. 3 is a capacity-electrode potential graph that may confirm the performance of the graphene lithium ion capacitor proposed by the present invention;
FIGS. 4a to 4c are capacity-electrode potential graphs of the capacitors in the related art, which may each compare the performances of the graphene lithium ion capacitors;
FIG. 5 is a capacity-voltage graph that may confirm the performance of the graphene lithium ion capacitor proposed by the present invention; and
FIG. 6 is a capacity-cell voltage graph that may compare the graphene lithium ion capacitor with capacitors in the related art.

### MODES FOR CARRYING OUT THE PREFERRED EMBODIMENTS

Reference will now be made in detail to the preferred embodiments of the present invention, examples of which are illustrated in the accompanying drawings. It will also be apparent to those skilled in the art that various modifications and variations can be made in the present invention without departing from the spirit or scope of the invention. Thus, it is intended that the present invention cover modifications and variations of this invention provided they come within the scope of the appended claims and their equivalents.

Hereinafter, a graphene lithium ion capacitor related to the present invention will be described in more detail with reference to the drawings. In the present specification, like reference numbers are used to designate like constituents even though they are in different exemplary embodiments, and the description thereof will be substituted with the initial description. Singular expressions used herein include plurals expressions unless they have definitely opposite meanings in the context.

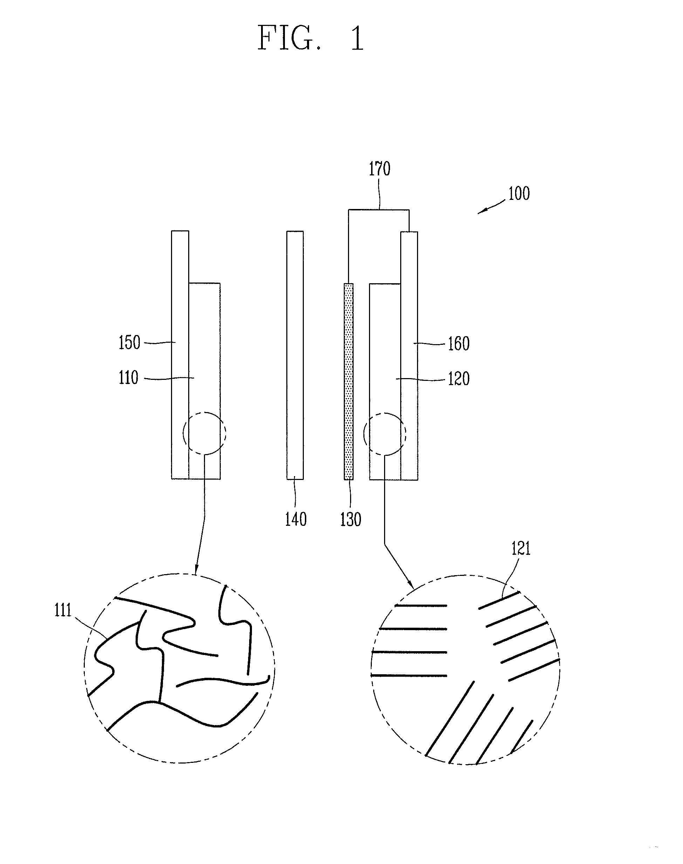

FIG. 1 is a conceptual view of a graphene lithium ion capacitor 100 related to an exemplary embodiment of the present invention, illustrating a state before being pre-doped with lithium ions.

Hereinafter, the entire configuration of the graphene ion capacitor 100 will be described, and subsequently, characteristics of the present invention in which graphene is adopted as a material for an electrode(a cathode and/or an anode) will be described. And then, the other configurations of the graphene ion capacitor 100 will be described.

First, when the entire configuration of the graphene lithium ion capacitor 100 is described, the graphene lithium ion capacitor includes a cathode 110 and 150, an anode 120 and 160, a lithium sacrificial electrode 130, a separator 140, and a lithium electrolyte (not illustrated).

The cathode 110 and 150 and the anode 120 and 160 are formed of a graphene material 110 partially or wholly. Graphene is composed of carbon atoms, and refers to a thin film having a thickness of one atom. In particular, in the present invention, the anode 120 and 160 are formed of a multilayered structure in which layers 121 of graphene are stacked, and the structure will be described below.

The lithium sacrificial electrode 130 is electrically connected to the anode 120 and 160 so as to provide pre-doping lithium ions to the anode 120 and 160. The lithium sacrificial electrode 130 is generally formed of a lithium metal, but may be used as long as pre-doping lithium ions may be provided to the anode 120 and 160, and is not necessarily limited thereto.

The separator 140 is disposed between the cathode 110 and 150 and the anode 120 and 160 so as to separate the cathode 110 and 150 and the anode 120 and 160. The separator 140 is formed porously such that ions pass through.

The lithium electrolyte is bonded to the cathode 110 and 150 and the anode 120 and 160 in a state of being dissociated into ions to flow current between the cathode 110 and 150 and the anode 120 and 160. During the charge of the graphene lithium ion capacitor 100, the negative ions dissociated into the electrolyte are bonded to the cathode 110 and 150, and the positive ions are bonded to the anode 120 and 160. In contrast, during the discharge of the graphene lithium ion capacitor 100, the negative ions dissociated into the electrolyte are emitted from the cathode 110 and 150, and the positive ions are emitted from the anode 120 and 160.

It is possible to form various types of cells, such as coin type, cylindrical type, prismatic type, and pouch type cells.

Next, characteristics of the present invention in which graphene is selected as a material for the electrode(the cathode and the anode) will be described. In the present invention, a graphene material or a composite material, in which the graphene material is mixed with a heterogeneous material, is used as an active material for the electrode.

In the present invention, particularly, the anode 120 and 160 are formed of a multilayered structure so as to adsorb lithium ions provided from the lithium sacrificial electrode on a surface of the anode 120 and 160 and so as to accommodate lithium ions intercalated between layers 121 of graphene which forms the anode 120 and 160. When the anode 120 and 160 are formed of a multilayered structure of the graphene layer 121, lithium ions provided from the lithium sacrificial electrode 130 may be smoothly intercalated between graphene layers 121 or desorbed from the graphene layers 121. For example, the anode 120 and 160 may be formed by stacking 2 to 500 layers of graphene layers 121.

When lithium ions are electro-deposited only on the surface of graphene, a lithium metal is formed, and the lithium metal forms a dendrite structure as the number of charges and discharges of the capacitor is increased. The dendrite structure is responsible for a cell short-circuit, and thus, may cause a problem with stability of the capacitor.

However, the anode 120 and 160 in the present invention are formed of a multilayered structure in which graphene layers 121 are stacked, and lithium ions provided from the lithium sacrificial electrode 130 are adsorbed on the surface of graphene 120, and intercalated between the graphene layers 121. The anode 120 and 160 formed of a multilayered structure of graphene layers 121 are pre-doped with lithium ions, and thus at least a part of the surface and the multilayered structure are formed of lithium carbide. When the surface and even the inside of the anode 120 and 160 are formed of lithium carbide, the dendrite structure is not formed even though the number of charges and discharges of the capacitor 100 is increased, thereby improving stability of the capacitor 100. Therefore, the anode 120 and 160 formed of a multilayered structure of the graphene layer 121 may improve reliability of the capacitor 100.

The anode 120 and 160 may also be formed of a graphene material 120, but may also be formed of a composite material in which the graphene material 120 is mixed with a heterogeneous material. The heterogeneous material includes at least one selected from the group consisting of a metal material, a metal oxide, a sulfide, and a nitride.

The metal material is reacted with lithium ions to form a lithium metal alloy. When the composite material, in which the graphene material 120 is mixed with the metal material, is pre-doped with lithium ions, a lithium metal alloy is formed as a result of reaction with lithium carbide.

The metal oxide is reacted with lithium ions to form a lithium metal oxide. When the composite material, in which the graphene material 120 is mixed with the metal oxide, is pre-doped with lithium ions, a lithium metal oxide is formed as a result of reaction with lithium carbide.

The sulfide is reacted with lithium ions to form a lithium sulfide. When the composite material, in which the graphene material 120 is mixed with the sulfide, is pre-doped with lithium ions, a lithium sulfide is formed as a result of reaction with lithium carbide.

The nitride is reacted with lithium ions to form a lithium nitride. When the composite material, in which the graphene material 120 is mixed with the nitride, is pre-doped with lithium ions, a lithium nitride is formed as a result of reaction with lithium carbide.

The composite materials may be used in a bulk reaction in which lithium ions may be intercalated inside of the graphene layer 121 or desorbed from the graphene layer 121. Therefore, the composite materials may provide additional capacitance to the graphene lithium ion capacitor 100 as much as lithium ions used in the bulk reaction.

There may be various methods of providing lithium ions for pre-doping the anode 120 and 160 from the lithium sacrificial electrode 130. Hereinafter, an electrochemical method, a physical method, and a chemical method will be described.

As the electrochemical method of providing lithium ions for pre-doping the anode 120 and 160 from the lithium sacrificial electrode 130, two methods may be used.

First, the lithium sacrificial electrode 130 may be electrically connected to the graphene material 120 of the anode 120 and 160 or the current collector 160 to form a galvanic cell, and may be dissociated into lithium ions by an electrochemical reaction.

The electrochemical methods other than the method electrically connect the lithium sacrificial electrode 130 to the graphene material 120 or the current collector 160, and dissociate lithium ions from the lithium sacrificial electrode 130 by externally applying voltage and current thereto.

The physical method of providing lithium ions for pre-doping the anode 120 and 160 from the lithium sacrificial electrode 130 forms a high-temperature environment locally in the lithium sacrificial electrode 130 compared to other regions of the graphene lithium ion capacitor 100, thereby dissociating lithium ions from the lithium sacrificial electrode 130.

The chemical method of providing lithium ions for pre-doping the anode 120 and 160 from the lithium sacrificial electrode 130 dissociate lithium ions from the lithium sacrificial electrode 130 by injecting a solubilizing agent (not illustrated) into the capacitor 100.

As the solubilizing agent, an organic molecule which may donate electrons to the lithium ions may be used in the form of naphthalene or N-methyl pyrrolidinone, and the like. The solubilizing agent may be a single-molecule compound selected, in combination, from the group consisting of a) a 5-membered or 6-membered monocyclic compound including a heterogeneous element of C, N, O, Si, P, or S based on an electronic hybrid structure, b) a polycyclic compound in which at least two rings among rings are connected to each other, and c) a polycyclic compound in which at least two rings among rings share at least one element.

The lithium ions dissociated into the electrolyte from the lithium sacrificial electrode 130 may be provided for pre-doping the anode 120 and 160.

At least a part of the cathode 110 and 150 are formed of a graphene material 110 likewise in the anode 120 and 160. In order to sufficiently secure the energy density of the graphene lithium ion capacitor 100, it is preferred that the cathode 110 and 150 are formed of a graphene material having a specific surface area of 100 m²/g or more. In general, the cathode 110 and 150 except for the current collector 150 may have a thickness of 50 to 300 µm.

The graphene material 100 may also be formed flat, but at least a part thereof may be formed in a wrinkled or crumpled form so as to prevent the specific surface area from being decreased due to the restacking of graphene layers. For the graphene material, restacking of graphene layers 111 may be generated by van der Waals interaction, and the restacking of graphene layers 111 is responsible for a decrease in specific surface area of the electrode(the cathode 110 and 150, the acode 120 and 160) and a decrease in capacitance of the electrode(the cathode 110 and 150, the acode 120 and 160). When the graphene layer 111 is formed in a wrinkled or crumpled form, it is possible to prevent the graphene layers from being restacked and prevent the capacitance of the electrode(the cathode 110 and 150, the acode 120 and 160) from being decreased.

The cathode 110 and 150 may further include a spacer (not illustrated) intercalated between the graphene layers 111 so as to prevent the specific surface area from being decreased due to the restacking of the graphene layers 111. The spacer is disposed between the graphene layers 111 to suppress the graphene layers 111 from being restacked.

The spacer may be formed of a carbon material so as to prevent the graphene layers 111 from being restacked, and prevent the electric conductivity of the cathode 110 and 150 from deteriorating. As the carbon material for the spacer, carbon nano tube (CNT), carbon nano fiber (CNF), and carbon black may be used. This is because the carbon materials as described above are materials having high electric conductivity, and thus, may serve as a spacer without deterioration in electric conductivity even though being intercalated between the graphene layers. Further, the carbon materials as described above have a specific surface area, and thus, are advantageous in that the carbon materials may contribute to an increase in specific surface area of the cathode 110 and 150.

The cathode 110 and 150 may be formed through an activation process using a physicochemical method so as to additionally including pores which include the specific surface area of the graphene material 110.

The activation process refers to a process of increasing the specific surface area by forming pores of the material, which is used for preparing activated carbon. In the present invention, the specific surface area of the cathode 110 and 150 may be increased by selectively adopting the graphene material 110.

The physical method forms pores in the graphene material 110 by exposing the graphene material 110 to oxygen, carbon dioxide, or steam. The chemical method causes a chemical reaction with any one of acid, base, and metallic salt. As the acid, base, and metallic salt, H₃PO4, KOH, NaOH, K₂CO₃, Na₂CO₃, ZnCl₂, AlCl₃ and MgCl₂, and the like may be used.

Additional pores may be formed on the surface of the graphene material through the physical method or the chemical method, and the specific surface area of the graphene material 110 may be increased through this.

The cathode 110 and 150 may be formed by doping the graphene material 110 with a heterogeneous material so as to improve reactivity with ions dissociated into the electrolyte. The heterogeneous material may be the group consisting of, for example, nitrogen (N), sulfur (S), oxygen (O), silicone (Si), and boron (B), and at least one selected from the group may be doped into the graphene material 110. When the heterogeneous material is doped into the graphene material 110, electrical characteristics and reactivity of the graphene material 110 are modified, and thus reactivity with ions in the electrolyte is increased, and the capacitance of the cathode 110 and 150 may be increased.

The cathode 110 and 150 may be formed of a composite material in which the graphene material 110 is mixed with the heterogeneous material so as to improve the specific capacitance due to the oxidation reduction reaction with ions dissociated into the electrolyte. The heterogeneous material may be the group consisting of a metal, an oxide, a sulfide, a nitride, MPO₄ (herein, M is a transition metal), and a chalcogen material, and at least one selected from the group may be mixed with the graphene material 110.

The heterogeneous materials accumulate electricity by using an oxidation reduction reaction principle with ions of the electrolyte therein, and the capacitance of the electrode(the cathode 110 and 150, the acode 120 and 160) expressed by using the principle refers to pseudo-capacitance. In general, the pseudo-capacitance is several to several ten times higher than the capacitance due to a surface reaction in which ions are adsorbed or desorbed on or from the surface of the material. Therefore, when the cathode 110 and 150 are formed of a composite material in which the heterogeneous materials are mixed with the graphene material 110, it is possible to secure a relatively higher specific capacitance.

The method of pre-doping the anode 120 and 160 may also be applied to the cathode 110 and 150 as it is. In the present invention, in addition to pre-doping of the anode 120 and 160, the pre-doping of the cathode 110 and 150 may be implemented by a method of pre-doping the cathode 110 and 150 with lithium ions and transporting the pre-doping lithium ions in the cathode 110 and 150 from the cathode 110 and 150 to the anode 120 and 160 during the charge of the capacitor 100. Therefore, the electrochemical, physical, and chemical methods of pre-doping the anode 120 and 160 may also be applied to the pre-doping of the cathode 110 and 150.

At least one of the cathode 110 and 150 and the anode 120 and 160 may include a binder (not illustrated) and a conductive material (not illustrated).

The binder is formed so as to attach the layers of graphene to each other. The conductive material is formed so as to limit the loss of electric conductivity due to the addition of the binder. As the binder, polyvinylidene fluoride (PVDF), polytetrafluoroethylene (PTFE), polyvinyl alcohol (PVA), styrene butadiene (SBR), and the like may be used. Furthermore, as the conductive material, carbon black, vapor grown carbon fiber (VGCF), and the like may be used.

There are many methods of forming the cathode 110 and 150 or the anode 120 and 160 by mixing the binder with the conductive material, but herein, only two methods will be described.

The first method is to form the cathode 110 and 150 or the anode 120 and 160 by mixing the graphene materials 110 and 120, the binder, and the conductive material in a slurry form, and coating a current collector with the slurry.

The second method is to form the cathode 110 and 150 or the anode 120 and 160 by mixing the graphene materials 110 and 120, the binder, and the conductive material to form a paste kneading sheet, and attaching the paste kneading sheet to a current collector. The method of forming a paste kneading sheet may also be used for the case where a thick electrode(the cathode and/or the anode) having a thickness of 100 µm or more is prepared.

It is preferred that the weight ratio of the cathode 110 and 150 and the anode 120 and 160 has a value ranging from 0.5 to 5. The energy density of the cell in the graphene lithium ion capacitor 100 may vary depending on the weight ratio of the cathode 110 and 150 and the anode 120 and 160, and the cell needs to be designed such that the weight ratio of the cathode 110 and 150 and the anode 120 and 160 has a value ranging from 0.5 to 5 for the optimal performance.

The electrolyte may be formed by dissolving lithium salt in an organic solvent or dissolving lithium salt in an ionic liquid.

The lithium salt may be LiPF₆. The organic solvent may be ethylene carbonate (EC), diethyl carbonate (DEC), and dimethyl Carbonate (DMC). The electrolyte may be formed by dissolving LiPF₆ in an organic solvent such as EC, DEC, and DMC.

Since a typical organic solvent is decomposed at a high voltage of 4 V or more, the voltage of the cell may not be increased to 4 V or more, but since the ionic liquid is stable even at a high voltage of 4 V or more, the voltage of the cell may be increased to 4 V or more. Further, when the voltage of the cell is increased, there is an advantage in that the energy density of the cell is increased.

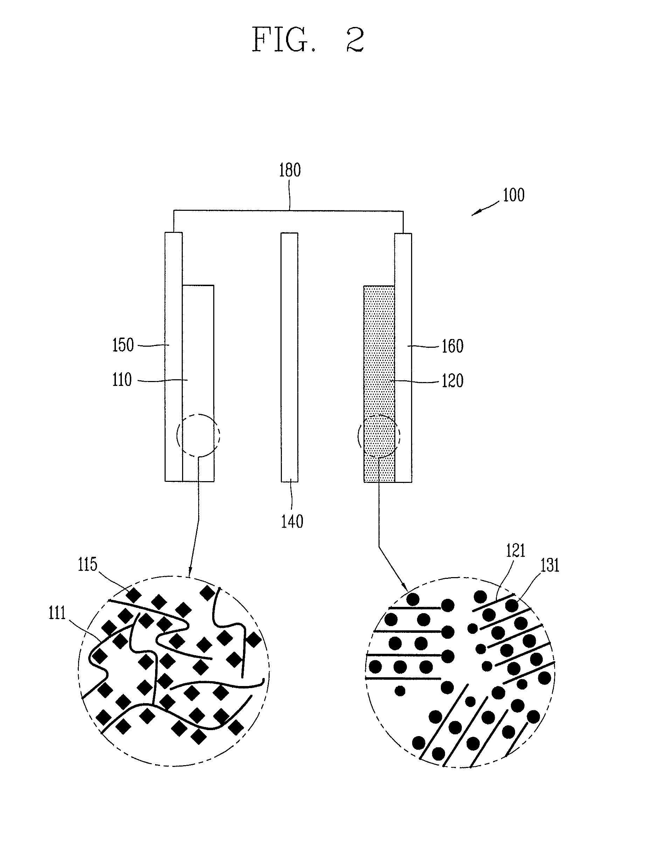

FIG. 2 is a conceptual view illustrating a state after the graphene lithium ion capacitor 100 illustrated in FIG. 2 is pre-doped with lithium ions 131.

FIG. 1 illustrates a state before the anode 120 and 160 are pre-doped, and FIG. 2 illustrates a state after the anode 120 and 160 are pre-doped. As illustrated in FIG. 1, when the lithium sacrificial electrode 130 is electrically connected to the current collector 160 of the anode 120 and 160 and electric energy is externally applied thereto, lithium ions 131 are dissociated from the lithium sacrificial electrode 130.

Referring to FIG. 2, lithium ions 131 are adsorbed on the surface of the anode 120 and 160 formed of a multilayered structure of graphene layers 121, and are intercalated between the graphene layers 121. In particular, the multilayered structure of the anode 120 and 160 is bonded to more lithium ions 131 than a single-layered graphene material, so that the capacitance of the capacitor 100 may be increased.

Negative ions 115 are adsorbed on the cathode 110 and 150. Referring to FIG. 2, the cathode 110 and 150 are formed in a crumpled form in order to prevent the restacking, and negative ions 115 are adsorbed on the surface of the graphene material.

The graphene lithium ion 131 capacitor 110 repeats charge and discharge in the state as in FIG. 2. When the cell is completely charged, the negative ions 115 in the electrolyte are adsorbed on the surface of the graphene layer 111 of the cathode 110 and 150, and the lithium ions 131 are intercalated between the surface of the graphene material 120 and the graphene layers 121 of the anode 120 and 160. Conversely, when the cell is completely discharged, the negative ions 115 and the lithium ions 131 are separated from the cathode 110 and 150 and the anode 120 and 160, respectively.

The charge and discharge of the graphene lithium ion 131 capacitor 100 is a repetition of the process in which the negative ions 115 and the lithium ions 131 are bonded to or desorbed from the cathode 110 and 150 and the anode 120 and 160.

In the present invention, the anode 120 and 160 having a multilayered structure formed by stacking the graphene layers 121 may improve output characteristics of the capacitor 100. The graphene material 120 having a multilayered structure sufficiently includes a reaction site which may be reacted with lithium ions 131 by a wide specific surface area. In addition, when lithium ions 131 are intercalated into the graphene layer 121, or desorbed from the graphene layer 121, it is possible to improve output characteristics of the anode 120 and 160 because the diffusion distance of lithium ions 131 may be shortened more than the distance for the structure in the related art

The present invention may provide the capacitor 100 in which the energy density is improved more than for the structure in the related art by applying the graphene material 110 even to the cathode 110 and 150. The theoretical specific surface area of a graphene material 110 is 2.675 m²/g, and when the theoretical specific surface area is all utilized, an electrical double-layer specific capacitance of 550 F/g or more may be theoretically implemented. Therefore, when the graphene material is utilized in the cathode 110 and 150, a capacitor 100 having high specific capacitance characteristics of 500 F/g or more may be theoretically provided.

Hereinafter, the description will be made with reference to graphs, such that the effects of the present invention may be visually confirmed.

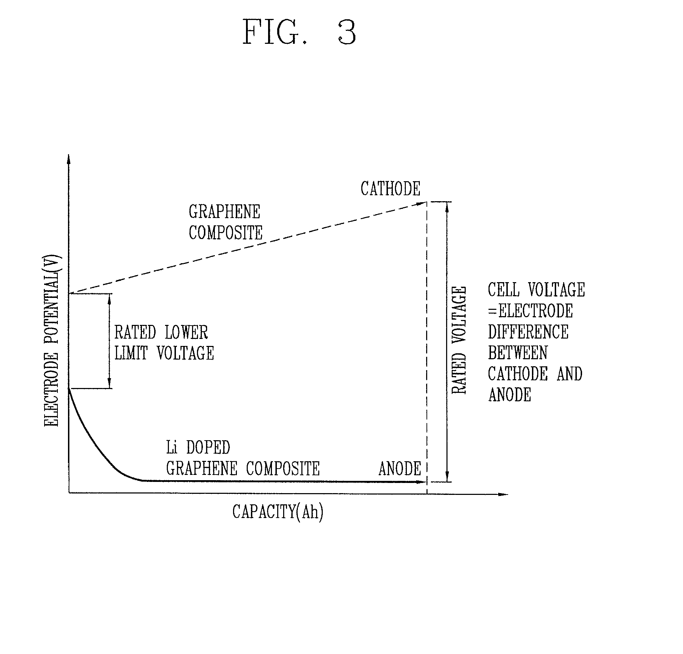

FIG. 3 is a capacity-electrode potential graph which may confirm the performance of the graphene lithium ion capacitor proposed by the present invention.

The capacitor is present in a state where there is difference by a lower limit voltage of the capacitor due to a potential difference between the cathode and the anode before the charge, and when the charge begins, the potential of the cathode begins to increase and the potential of the anode begins to decrease.

The potential of the cathode increases relatively linearly. When the charge of the capacitor is completed and the discharge thereof proceeds, the potential of the cathode again decreases linearly and will return to the potential before the charge begins.

The potential of the anode is pre-doped with lithium ions, and thus, sharply decreases in the relatively initial stage, and the decrease width is gradually reduced. When compared to the case where the potential of the anode linearly decreases, it can be confirmed that a relatively larger capacitance may be secured.

In a state where the charge is completed, the potential difference between the cathode and the anode represents a rated voltage of the cell, and the rated voltage is increased as the potential difference is increased, thereby exhibiting that the performance of the capacitor is excellent in terms of cell voltage.

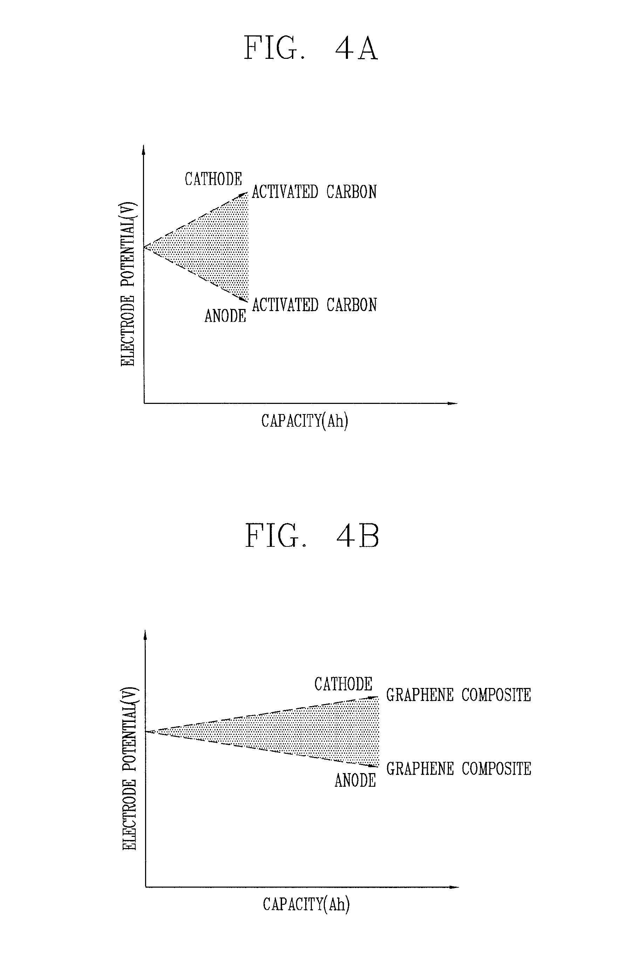

FIGS. 4a to 4c are capacity-electrode potential graphs of the capacitors in the related art, which may each compare the performances of the graphene lithium ion capacitors.

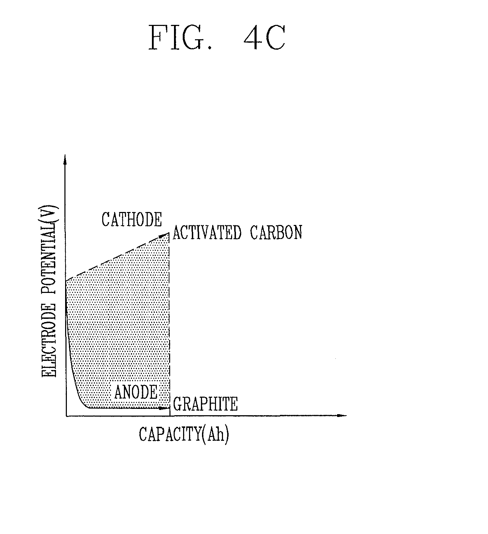

FIG. 4a illustrates an electrical double layer capacitor using activated carbon. FIG. 4b illustrates an electrical double layer capacitor using graphene. FIG. 4c illustrates a lithium ion capacitor.

When the graphs illustrated in FIGS. 4a and 4c are compared with the graph of FIG. 3, it can be confirmed that FIG. 3 exhibiting the effects of the present invention has larger voltage values and capacity values of the cell than those of FIGS. 4a to 4c.

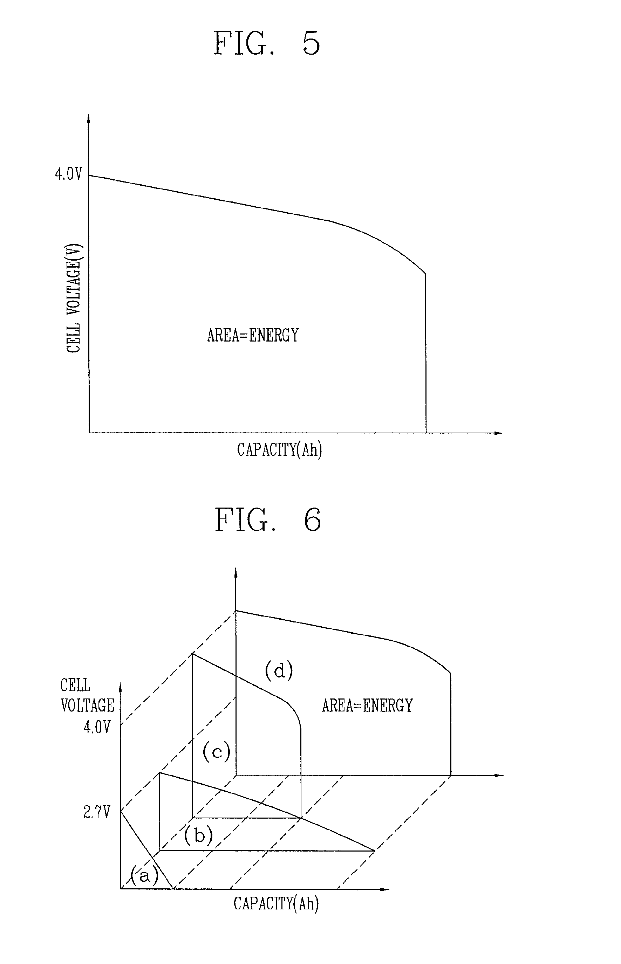

FIG. 5 is a capacity-voltage graph that may confirm the performance of the graphene lithium ion capacitor proposed by the present invention.

The graphene lithium ion capacity may set the voltage (potential difference of the cathode and the anode) of the cell to 4 V or more, and as the capacity increases, the voltage of the cell decreases. In the graph, the area indicates energy.

FIG. 6 is a capacity-cell voltage graph that may compare the graphene lithium ion capacitor with capacitors in the related art.

FIG. 6(a) illustrates an electrical double layer capacitor using activated carbon. FIG. 6(b) illustrates an electrical double layer capacitor using graphene. FIG. 4(c) illustrates a lithium ion capacitor. FIG. 4(d) illustrates a graphene lithium ion capacitor proposed by the present invention.

When (a) to (d) are compared with each other, the voltage in (d) is higher than those in (a) and (b). Accordingly, it can be confirmed that the present invention has a larger voltage than that of the electrical double layer capacitor using activated carbon or graphene.

In addition, when (a) to (d) are compared with each other, the capacity in (d) is higher than those in (a) and (c). Accordingly, it can be confirmed that the present invention has larger capacities than those of the electrical double layer capacitor and the lithium ion capacitor.

When the areas of (a) to (d) are compared with each other, the area in (d) is higher than those in (a) to (c). Accordingly, it can be confirmed that the present invention is a capacitor having relatively larger energy than the capacitors of (a) to (c).

The graphene lithium ion capacitor as described above is not limited by the configurations and methods of the exemplary embodiments as described above, but the exemplary embodiments may also be configured by selectively combining a whole or part of the exemplary embodiments, such that various modifications can be made.

The present invention may be used in various forms in the technical field which requires a capacitor having high energy and high output performances.

## Claims

1. A graphene lithium ion capacitor comprising:
a cathode and an anode formed of a graphene material partially or wholly;
a lithium sacrificial electrode electrically connected to the anode so as to provide pre-doping lithium ions to the anode;
a separator disposed between the cathode and the anode; and
an electrolyte bonded to the cathode and the anode in a state of being dissociated into ions to flow current between the cathode and the anode,
wherein the anode is formed of a multilayered structure so as to adsorb lithium ions provided from the lithium sacrificial electrode on a surface thereof and so as to accommodate the lithium ions intercalated between graphene layers, and at least a part of the surface and the multilayered structure are formed of lithium carbide by reaction with the lithium ions.

2. The graphene lithium ion capacitor of claim 1, wherein the anode is formed by stacking 2 to 500 layers of the graphene layers so as to form the multilayered structure.

3. The graphene lithium ion capacitor of claim 1, wherein the anode is formed of a composite material in which the graphene material is mixed with a heterogeneous material, and
the heterogeneous material is at least one selected from a group consisting of
a) a metal material which is reacted with the lithium ions to form a lithium metal alloy,
b) a metal oxide which is reacted with the lithium ions to form a lithium metal oxide,
c) a sulfide which is reacted with the lithium ions to form a lithium sulfide, and
d) a nitride which is reacted with the lithium ions to form a lithium nitride.

4. The graphene lithium ion capacitor of claim 1, wherein the lithium sacrificial electrode is electrically connected to the graphene material of the anode to form a galvanic cell and is dissociated into the lithium ions by an electrochemical reaction, so as to provide pre-doping lithium ions to the anode.

5. The graphene lithium ion capacitor of claim 1, wherein the lithium sacrificial electrode is electrically connected to the graphene material of the anode and is dissociated into the lithium ions by externally applied voltage and current, so as to provide pre-doping lithium ions to the anode.

6. The graphene lithium ion capacitor of claim 1, wherein the lithium sacrificial electrode is dissociated into lithium ions by a high temperature environment which is locally formed on the lithium sacrificial electrode compared to the other regions of the capacitor, so as to provide pre-doping lithium ions to the anode.

7. The graphene lithium ion capacitor of claim 1, wherein the lithium sacrificial electrode is dissociated into lithium ions by a solubilizing agent injected into the capacitor so as to provide pre-doping lithium ions to the anode, and
wherein the solubilizing agent is composed of organic molecules which donate electrons to the lithium ions.

8. The graphene lithium ion capacitor of claim 7, wherein the solubilizing agent is a single-molecule compound selected, in combination, from the group consisting of
a) a 5-membered or 6-membered monocyclic compound including a heterogeneous element of C, N, O, Si, P, or S;
b) a polycyclic compound in which at least two rings among rings are connected to each other; and
c) a polycyclic compound in which at least two rings among rings share at least one element.

9. The graphene lithium ion capacitor of claim 1, wherein the cathode is formed of a graphene material having a specific surface area of 100 m²/g or more.

10. The graphene lithium ion capacitor of claim 1, wherein at least a part of the cathode is formed in a wrinkled or crumpled form so as to prevent a specific surface area from being decreased due to the restacking of the graphene layers.

11. The graphene lithium ion capacitor of claim 1, wherein the cathode comprises a spacer intercalated between the graphene layers so as to prevent the specific surface area from being decreased due to the restacking of the graphene layers, and
wherein the spacer is formed of a carbon material so as to maintain an electric conductivity of the cathode while preventing the graphene layers from being restacked.

12. The graphene lithium ion capacitor of claim 11, wherein the spacer is at least one selected from a group consisting of carbon nano tube, carbon nano fiber, and carbon black.

13. The graphene lithium ion capacitor of claim 1, wherein the cathode is formed via a process of being exposed to oxygen, carbon dioxide, or steam so as to further comprise pores which increase the specific surface area of the graphene.

14. The graphene lithium ion capacitor of claim 1, wherein the cathode is formed via a chemical reaction with any one of acid, base, and metallic salt so as to further comprise pores which increase the specific surface area of the graphene, and
wherein the acid, base, and metallic salt comprise H₃PO4, KOH, NaOH, K₂CO₃, Na₂CO₃, ZnCl₂, AlCl₃ and MgCl₂.

15. The graphene lithium ion capacitor of claim 1, wherein the cathode is formed by doping the graphene with a heterogeneous material so as to improve reactivity with ions dissociated into the electrolyte, and
wherein the heterogeneous material is at least one selected from a group consisting of nitrogen, sulfur, oxygen, silicone, and boron.

16. The graphene lithium ion capacitor of claim 1, wherein the cathode is formed of a composite material in which the graphene material is mixed with a heterogeneous material so as to improve a specific capacitance due to oxidation and reduction reaction with ions dissociated into the electrolyte, and
wherein the heterogeneous material is at least one selected from the group consisting of a metal oxide, a sulfide, a nitride, MPO₄ (herein, M is a transition metal), and a chalcogen material.

17. The graphene lithium ion capacitor of claim 1, wherein at least one of the cathode and the anode comprises
a binder formed so as to attach the graphene layers to each other; and
a conductive material formed so as to limit a loss of electric conductivity due to the binder.

18. The graphene lithium ion capacitor of claim 17, wherein the binder comprises polyvinylidene fluoride (PVDF), polytetrafluoroethylene (PTFE), polyvinyl alcohol (PVA), and styrene butadiene (SBR).

19. The graphene lithium ion capacitor of claim 17, wherein the conductive material comprises carbon black and vapor grown carbon fiber (VGCF).

20. The graphene lithium ion capacitor of claim 17, wherein at least one of the cathode and the anode, which comprises the binder and the conductive material is formed by mixing the graphene material, the binder, and the conductive material in a slurry form, and coating a current collector with the slurry.

21. The graphene lithium ion capacitor of claim 17, wherein at least one of the cathode and the anode, which comprises the binder and the conductive material is formed by mixing the graphene material, the binder, and the conductive material to form a paste kneading sheet, and attaching the paste kneading sheet to a current collector.

22. The graphene lithium ion capacitor of claim 1, wherein the electrolyte is formed by dissolving lithium salt in an organic solvent.

23. The graphene lithium ion capacitor of claim 1, wherein the electrolyte is formed by dissolving lithium salt in an ionic liquid.

24. The graphene lithium ion capacitor of claim 1, wherein a weight ratio of the cathode and the anode is 0.5 to 5.
